# FASCICULE DE BREVET EUROPEEN

(11) **EP 2 049 418 B1**
(45) Date de publication et mention de la délivrance du brevet: **09.12.2009**
(21) Numéro de dépôt: 07823531.4
(22) Date de dépôt: 02.07.2007
(51) Int. Cl.: B65G 23/44, B65G 43/00

(54) **PROCÉDÉ POUR CONTRÔLER LA TENSION D'UNE CHAÎNE DE CARROUSEL À GODETS**
VERFAHREN ZUR STEUERUNG DER SPANNUNG EINER KETTE EINES KETTENKARUSSELLS
METHOD FOR CONTROLLING THE TENSION OF A CHAIN OF A BUCKET CAROUSEL

(30) Priorité: 03.08.2006 FR 0653271
(43) Date de publication de la demande: 22.04.2009
(73) Titulaire: Solystic, 94257 Gentilly Cedex (FR)
(72) Inventeur: MARISY, Stéphane, 26500 Bourg Les Valence (FR); LEOPOLD, Bruno, 26120 Malissard (FR); DECHARRAN, Dominique, 26500 Bourg Les Valence (FR); DANJAUME, Alain, 26300 Besayes (FR)
(74) Mandataire: Prugneau, Philippe
(86) Numéro de dépôt international: PCT/FR2007/051575
(87) Numéro de publication internationale: WO 2008/020136

(56) Documents cités:
- EP-B1- 1 222 036
- US-A- 5 505 293

## Description

L'invention concerne un procédé pour contrôler la tension d'un organe allongé continu d'entraînement sans fin déplacé sur un trajet en boucle fermée et ayant un brin mou le long duquel il forme des ondulations.

L'invention s'applique plus particulièrement à une machine de traitement postal comprenant un ou plusieurs carrousels à godets dont les godets sont entraînés en déplacement selon un trajet en boucle fermée par l'intermédiaire d'une chaîne d'entraînement, à rouleaux sans fin ayant un brin mou le long duquel la chaîne forme des ondulations.

Une telle machine de traitement postal comportant plus particulièrement deux carrousels à godets superposés est par exemple connue du brevet européen EP 1 222 036 et est illustrée sur la figure 1.

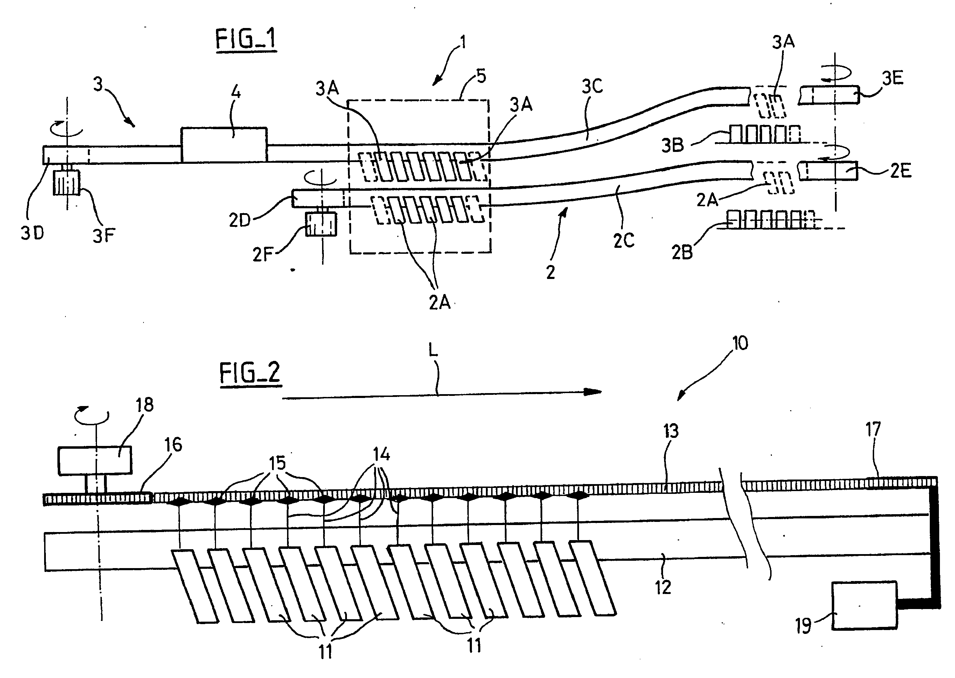

Sur la figure 1, la machine de traitement postal 1 comprend donc un convoyeur ou carrousel inférieur 2 constitué de godets 2A déplacés le long d'un premier trajet en boucle fermée et un convoyeur ou carrousel supérieur 3 constitué de godets 3A déplacés le long d'un second trajet en boucle fermée superposé au premier trajet.

Les deux trajets des godets s'étendent dans des plans sensiblement horizontaux. Le carrousel 2 dessert des premières sorties de tri constituées par des bacs tels que 2B disposés sur un premier niveau horizontal et le carrousel 3 dessert des secondes sorties de tri constituées par des bacs tels que 3B disposés sur un second niveau horizontal situé au-dessus du premier niveau de sorties de tri.

On a représenté sur la figure 1 un petit nombre de godets 2A,3A et de bacs 2B,3B mais on doit comprendre que les godets se répartissent sur toute la longueur du trajet des godets. Des carrousels à 200 ou 350 godets sont usuels dans les machines de traitement postal.

Comme représenté sur la figure 1, les godets 2A du carrousel 2 sont guidés en coulissement le long de leur trajet en boucle fermée par un système de rails 2C. En particulier, chaque godet 2A est muni d'une structure à plusieurs galets de roulement qui se déplacent dans plusieurs rails du système de rails 2C. La structure à galets est attelée à une chaîne d'entraînement sans fin (non représentée sur la figure 1) qui est engagée sur une poulie crantée 2D entraînée en rotation par un moteur 2F et qui est engagée également sur une poulie de retour et de tension de chaîne 2E.

Les godets 3A du carrousel 3 sont également guidés par un autre système de rails 3C et sont attelés à une autre chaîne d'entraînement sans fin (non représentée) qui est engagée sur la poulie crantée 3D entraînée en rotation par le moteur 3F et sur la poulie de retour et de tension de chaîne 3E.

La machine illustrée sur la figure 1 est alimentée en lettres ou autres objets plats par l'intermédiaire d'une ou plusieurs antennes d'entrée telles que 4 qui injectent les objets plats seulement dans les godets 3A du carrousel supérieur 3. Si des objets plats sont destinés à une sortie de tri desservie par le convoyeur inférieur 2, ceux-ci sont transférés d'un godet 3A du convoyeur 3 vers un godet 2A du convoyeur inférieur 2 au travers d'une zone de transfert 5. Dans cette zone de transfert, les mouvements des godets 2A et 3A des convoyeurs 2 et 3 sont synchronisés par un arbre électrique. Dans la zone de transfert 5, les godets 2A et 3A des deux convoyeurs suivent des trajets parallèles très rapprochés dans un plan vertical pour permettre le transfert par simple gravité d'un objet plat contenu dans un godet 3A vers un godet 2A.

Dans une telle machine de traitement postal telle que décrite ci-dessus, il est nécessaire que les deux chaînes d'entraînement des carrousels 2 et 3 respectivement conservent un niveau de tension adéquat dans le temps. De ce fait, il est nécessaire de vérifier fréquemment le niveau de tension des chaînes, une chaîne trop tendue pouvant se dégrader sous des efforts trop importants et une chaîne pas assez tendue engendrant une dégradation des godets par entrechoquement.
Cette vérification est habituellement effectuée par un contrôle visuel. Pour cela, un opérateur monte sur la partie supérieure du carter de la machine, ouvre un ou plusieurs capots du carter de la machine et observe les deux chaînes. En particulier, l'opérateur observe le flottement des chaînes mais un tel contrôle s'avère approximatif car lié à l'appréciation de l'opérateur.

De plus, du fait que le contrôle doit se faire pendant le fonctionnement de la machine, il existe un risque non négligeable d'accident pour l'opérateur qui est amené à se pencher à l'intérieur du carter de la machine pour s'approcher des chaînes en mouvement.

Enfin, le contrôle de la tension des chaînes n'est pas assez fréquent pour palier tout risque de rupture d'une chaîne due par exemple à une surtension rapide de la chaîne.

On connaît, dans certains domaines techniques différents du traitement postal, des systèmes automatique de vérification de la tension d'une chaîne d'entraînement sans fin.

On connaît par exemple du document de brevet DE 3 927 892 un dispositif permettant de vérifier la tension d'une chaîne d'entraînement sans fin selon lequel on exerce une pression sur la chaîne perpendiculairement à la direction de déplacement de celle-ci et on compare des valeurs de réaction à la pression par rapport à des valeurs limites connues.

Une telle vérification est impossible sur la chaîne d'entraînement d'un carrousel à godets d'une machine de tri postal du fait de la présence des godets attelés à la chaîne.

On connaît également du document de brevet DE 3 502 664 un dispositif permettant de vérifier la tension d'une chaîne d'entraînement au moyen d'une pluralité de capteurs de force associés aux poulies sur lesquelles est engrenée la chaîne. Une telle installation est très complexe et coûteuse à mettre en oeuvre.

On connaît encore du brevet US 5 641 058 un procédé pour vérifier en permanence et en temps réel la tension d'une chaîne engagée sur deux poulies crantées en mesurant la force exercée par des vérins hydrauliques pour maintenir les deux poulies à une certaine distance. Ce procédé n'est pas adapté à la longueur d'une chaîne d'entraînement d'un carrousel à godets d'une machine de tri postal.

Le but de l'invention est de proposer un autre procédé pour contrôler la tension d'une chaîne d'entraînement sans fin dans un carrousel à godets pour machine de tri postal.

En particulier, un but de l'invention est de proposer un tel procédé qui permette de contrôler en continu la tension de la chaîne.

Un autre but de l'invention est de proposer un tel procédé qui soit simple et peu coûteux à mettre en oeuvre.

A cet effet, l'invention a pour objet un procédé pour contrôler la tension d'un organe allongé continu d'entraînement sans fin déplacé sur un trajet en boucle fermée et ayant un brin mou le long duquel il forme des ondulations, caractérisé en ce qu'il consiste à placer sur ledit trajet en boucle fermée un capteur pour détecter le passage des ondulations du brin mou et à comptabiliser le nombre d'ondulations détectées par le capteur, ce nombre d'ondulations comptabilisées servant de grandeur de mesure de la tension de l'organe d'entraînement.

L'idée de l'invention repose donc sur le fait que le nombre d'ondulations qui se forment sur le brin mou d'une chaîne est représentatif de la tension de la chaîne. Ce nombre d'ondulations est d'autant plus important (dans certaines limites) que la chaîne est détendue. Comme ces ondulations naissent à proximité de la poulie crantée d'entraînement et s'amortissent à proximité du guide de renvoi, on réalise la détection du passage des ondulations là où les ondulations ont l'amplitude maximale, c'est-à-dire à proximité et en aval de la poulie crantée d'entraînement.

Selon le procédé de l'invention, on utilise un capteur sans contact pour détecter le passage des ondulations du brin mou, par exemple un capteur inductif, un capteur optique ou analogue de sorte que le contrôle de la tension d'une chaîne d'entraînement de carrousel à godets est indépendant de la longueur de la chaîne. Comme capteur inductif, on peut utiliser le capteur appelé « IFFM 20P17A3 » vendu par la société « BAUMER » qui est assez compact pour être logé facilement dans des endroits exigus d'un carrousel à godets.

L'invention s'étend à une machine de traitement postal comprenant un carrousel à godets dont les godets sont entraînés en déplacement selon un trajet en boucle fermée par l'intermédiaire d'une chaîne d'entraînement sans fin ayant un brin mou le long duquel la chaîne forme des ondulations, caractérisée en ce qu'elle comprend un système apte à détecter le passage des ondulations du brin mou de la chaîne et à comptabiliser le nombre d'ondulations détectées pour contrôler la tension de la chaîne.

Selon l'invention, cette machine peut présenter les particularités suivantes :
- le système comprend un capteur inductif ou un capteur optique placé sur un rail de guidage des godets pour détecter le passage des ondulations du brin mou de la chaîne ;
- le système comprend une unité de traitement de données qui compare à une valeur de consigne le nombre d'ondulations comptabilisées dans une période de temps donnée pour fournir un signal de commande d'alarme ou de réglage ;
- la dite unité de traitement de données est programmée pour répéter de façon cyclique l'opération de comparaison.

Selon l'invention, le terme organe d'entraînement allongé sans fin qui se déplace sur un trajet en boucle fermée n'est pas limité à une chaîne mais doit s'entendre de tout type d'organe allongé sans fin utilisé dans la transmission de mouvements et l'entraînement en déplacement de paniers, nacelles ou autres pour le transport de personnes ou d'objets, comme par exemple un câble, une courroie ou analogue.

L'invention sera mieux comprise à la lecture de la description qui suit et à l'examen des figures qui l'accompagnent. Cette description n'est donnée qu'à titre d'exemple indicatif et nullement limitatif de l'invention.
La figure 1 est une vue d'ensemble schématisée d'une machine de tri postal à deux carrousels selon l'art antérieur.
La figure 2 est une vue de face schématisée d'un carrousel à godets d'une machine de traitement postal selon l'invention.
La figure 3 est une représentation schématique en vue de dessus du trajet des étriers de fixation des structures de roulement et de guidage des godets sur la chaîne d'entraînement.
La figure 4 est une représentation en vue de dessus du brin mou d'une chaîne sur lequel se forment des ondulations.
La figure 5 est un synoptique montrant les différentes étapes du contrôle de la tension de la chaîne.
La figure 6 est une représentation schématique en coupe transversale d'un godet et de sa structure de roulement et de guidage agencée sur un système de rails et d'un capteur inductif.

Le procédé selon l'invention peut être mis en oeuvre dans une machine de traitement postal analogue à celle présentée dans la figure 1 et décrite dans le brevet EP 1 222 036 et s'applique plus particulièrement aux dispositifs ayant une chaîne en boucle fermée entraînée en déplacement en un unique point.

Pour simplifier la description de l'invention, un seul carrousel à godets d'une machine de traitement postal (tri postal) a été illustré sur la figure 2. Le carrousel 10 comprend des godets 11 pour le transport d'envois postaux.

Les godets 11 se déplacent selon un trajet formant une boucle fermée. Les godets 11 ont chacun un système de roulement et guidage à galets qui se déplace dans un système de rails 12 selon la direction L. Le système à galets est attelé en mouvement selon la direction L à une chaîne sans fin 13, par exemple une chaîne à rouleaux, par l'intermédiaire d'une patte de suspension 14 et d'un étrier de fixation 15 représenté par un losange sur la figure 2. En pratique, les godets 11 du carrousel sont répartis à même distance sur toute la longueur de la chaîne 13, c'est à dire que les étriers de fixation 15 des godets sur la chaîne sont distants deux à deux d'une longueur de quelques dizaines de centimètres, et plus particulièrement de 285 mm.

La chaîne d'entraînement 13 est engagée ici sur une première poulie crantée 16 et une glissière de renvoi 17 (ou seconde poulie crantée de retour) placée à distance de la première poulie 16. La poulie 16 est motorisée en 18 et la glissière de renvoi 17 est munie d'un système de réglage de tension de la chaîne 19.

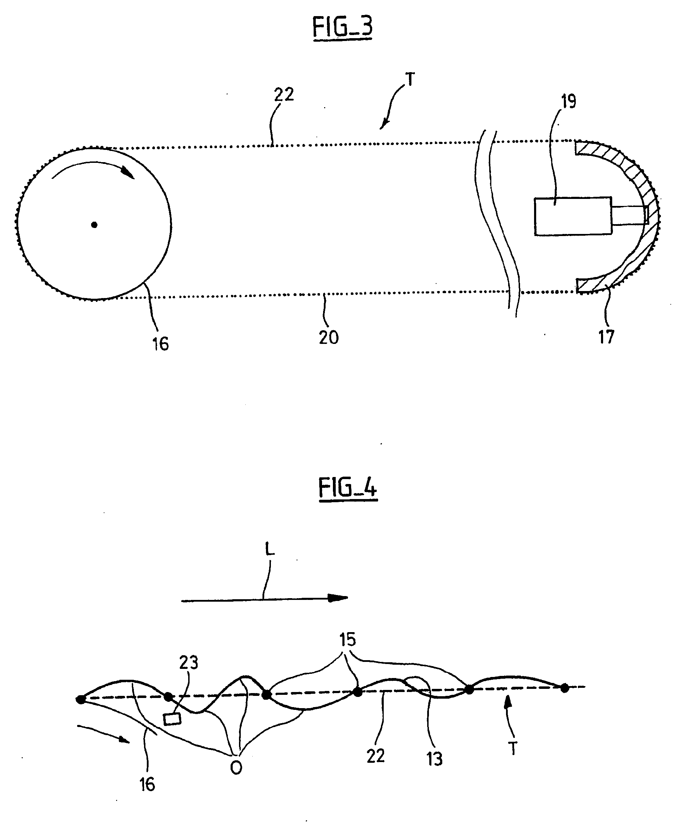

Sur la figure 3, on a illustré le brin tendu 20 de la chaîne et le brin mou 22 de la chaîne le long du trajet en boucle fermée T. A titre d'exemple, dans un carrousel à godets de machine de tri postal, la longueur d'un brin du trajet T est d'environ 60 mètres pour une largeur de la boucle de 2 mètres.

La chaîne d'entraînement 13 est plus particulièrement une chaîne à rouleaux et à maillons plats, lesquels maillons plats s'étendent dans le plan de la figure 3. En sortie de la poulie 16, des ondulations se forment sur le brin mou 22. Ces ondulations se dessinent donc dans le plan de la figure 3, c'est-à-dire en pratique dans le plan horizontal.

Sur la figure 4, on a illustré des ondulations O formées sur le brin mou 22 de la chaîne 13. En particulier, on a illustré des ondulations qui se forment entre les étriers de fixation 15 juste en aval de la poulie motorisée 16. Ces ondulations ont tendance à s'amortir en allant en aval selon la direction L de déplacement de la chaîne 13. On a représenté le trajet T en trait interrompu qui est suivi par les systèmes à galets des godets 11 dans les rails 12 (et donc des étriers 15).

Les ondulations oscillent normalement de part et d'autre de ce trajet T comme illustré sur la figure 4 entre deux étriers de fixation 15 mais il n'est pas exclu que la chaîne 13 sur le brin mou forme des sortes d'ondulations que d'un côté du trajet T. On doit comprendre qu'au fur et à mesure que la chaîne sans fin 13 se déplace selon la direction L, des ondulations se forment, se déplacent selon la direction L et disparaissent en arrivant vers la glissière de renvoi 17.

Selon l'invention, on dispose un capteur sans contact 23 le long du trajet T au niveau du brin mou de la chaîne 13 pour détecter le passage des ondulations O.

Ce capteur 23 peut être un capteur inductif ou à induction ferromagnétique qui émet un champ magnétique et qui renvoie un signal lorsque ce champ magnétique est perturbé. En pratique comme illustré sur la figure 4, on dispose le capteur 23 de façon décalée par rapport au trajet T de sorte que le champ magnétique qu'il émet soit traversé par les ondulations O de la chaîne 13. Quand une ondulation O passe dans le champ magnétique du capteur 23 selon la direction L, elle crée une perturbation magnétique qui est détectée par le capteur 23 lequel fournit alors en sortie un signal correspondant. En pratique, l'amplitude maximale des ondulations (perpendiculairement à la direction L) est de quelques centimètres et on pourra par exemple déporter le capteur 23 de 2 centimètres du trajet T.

Bien entendu, d'autres capteurs sans contact peuvent également être utilisés tels que par exemple un capteur optique.

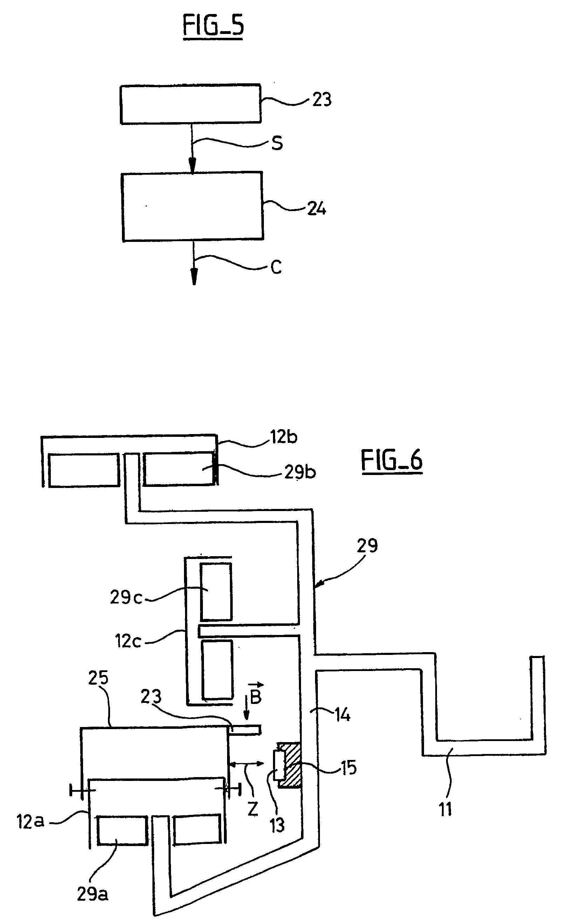

Comme visible sur la figure 5, le signal de sortie S du capteur 23 est envoyé sur une unité de traitement de données 24 qui comptabilise le nombre d'occurrences de détection dans une période de temps donnée. Cette comptabilisation peut être effectuée de façon cyclique par l'unité 24 de sorte que le contrôle de la tension de la chaîne peut être réalisé pratiquement en continue. Dans l'unité 24, le nombre d'occurrences comptabilisées dans une période de temps (réglable) est comparé à une valeur de consigne. La comparaison peut être ensuite poursuivie par l'envoi par l'unité 24 d'un signal d'alarme C par exemple ou encore un signal de commande pour le système de réglage de tension 19.

La valeur de consigne peut être un nombre d'occurrences comptabilisées avec une chaîne 13 présentant les caractéristiques requises de tension. La comparaison dans l'unité 24 consiste par exemple à comparer la valeur de consigne à la valeur réelle avec une tolérance de +/- 30% qui définissent la limité inférieure de sous tension de la chaîne et la limite supérieure de surtension de la chaîne.

Bien entendu, la comptabilisation dans l'unité 24 se fait lorsque le carrousel 10 est en fonctionnement et que la chaîne a atteint sa vitesse de fonctionnement opérationnelle.

En pratique, avec une chaîne entraînant à 1.14 m/s des godets dont les étriers de fixation à la chaîne sont espacés de 28 cm entre eux, un capteur inductif détectant le passage d'ondulations à une cinquantaine de centimètres selon la direction longitudinale L du point de désengagement de la poulie 16 et à environ 2 centimètres en décalage du trajet T, on a comptabilisé 375 occurrences en 100 secondes. Avec une tolérance de 30%, si le nombre d'ondulations détectées est inférieur à 260, la chaîne est trop tendue ; s'il est compris entre 260 et 485, la chaîne est correctement tendue, enfin s'il est supérieur à 485, la chaîne n'est pas assez tendue.

La période de comptage de 100 secondes correspond en pratique à la période nécessaire à la chaîne 13 pour faire au moins un tour du trajet T. Des essais ont montré que cette période donnait des résultats relativement fiables.

La figure 6 montre plus en détail un exemple de montage du capteur sans contact 23 du type inductif sur un système de rails 12 d'un carrousel à godets d'une machine de traitement postal.

Plus particulièrement, on a représenté sur la figure 6 en section transversale la chaîne 13 d'entraînement d'un godet 11 avec un ensemble de rails de guidage 12a,12b,12c d'un système à galets 29 soutenant le godet 11. Les rails 12a à 12c à section transversale en forme de « U » sont disposés selon des orientations différentes pour réaliser un emprisonnement selon 2 axes du système à galets.

Sur la figure 6, les rails 12a et 12b sont tournés vers le bas tandis que le rail 12c est tourné perpendiculairement aux rails 12a et 12b. On a également représenté en coupe trois galets 29a,29b,29c du système à galets 29 qui sont montés dans les rails 12a à 12c. Les galets 29a à 29c sont montés sur des axes de rotation solidaires d'une structure porteuse du godet 11 dont fait partie la patte de suspension 14 fixée sur la chaîne 13 par l'intermédiaire d'un étrier 15 ou analogue. En outre, deux autres galets non représentés du système à galets 29 roulent respectivement dans les mêmes rails 12a, 12b, que les galets 29a et 29c.

Le capteur 23 est monté par l'intermédiaire d'une potence 25 sur le rail 12a qui fait face à la chaîne 13. On a représenté par une double flèche la zone Z de formation/déplacement des ondulations de la chaîne 13 qui se trouve sous le capteur 23, c'est-à-dire dans la zone de détection du capteur 23 et donc d'émission du champ magnétique B.

Il est évident que l'invention n'est nullement limitée aux détails du mode de réalisation qui vient d'être décrit mais s'étend à toute variante évidente pour un homme de métier.

Il est par exemple possible de disposer deux capteurs sans contact tels que 23 respectivement des deux côtés du trajet T pour détecter les ondulations de la chaîne.

## Revendications

1. Procédé pour contrôler la tension d'un organe allongé continu d'entraînement sans fin (13) déplacé sur un trajet (T) en boucle fermée et ayant un brin mou (22) le long duquel il forme des ondulations (O), **caractérisé en ce qu'**il consiste à placer sur ledit trajet en boucle fermée un capteur (23) pour détecter le passage des ondulations du brin mou et à comptabiliser (24) le nombre d'ondulations détectées par le capteur, ce nombre d'ondulations comptabilisées servant de grandeur de mesure de la tension de l'organe d'entraînement.

2. Procédé selon la revendication 1, dans lequel on utilise un capteur sans contact pour détecter le passage des ondulations du brin mou.

3. Procédé selon la revendication 2, dans lequel on utilise un capteur inductif pour détecter le passage des ondulations du brin mou.

4. Procédé selon la revendication 2, dans lequel on utilise un capteur optique pour détecter le passage des ondulations du brin mou.

5. Procédé selon l'une des revendications 1 à 4, dans lequel l'organe d'entraînement est une chaîne d'entraînement de godets (11) dans une machine de traitement postal.

6. Machine de traitement postal comprenant un carrousel (1) à godets (11) dont les godets sont entraînés en déplacement selon un trajet (T) en boucle fermée par l'intermédiaire d'une chaîne d'entraînement (13) à rouleaux sans fin ayant un brin mou (22) le long duquel la chaîne forme des ondulations (O), **caractérisée en ce qu'**elle comprend un système (23) apte à détecter le passage des ondulations du brin mou de la chaîne et à comptabiliser le nombre d'ondulations détectées pour contrôler la tension de la chaîne.

7. Machine selon la revendication 6, dans laquelle le système comprend un capteur inductif placé sur un rail (12) de guidage des godets pour détecter le passage des ondulations du brin mou de la chaîne.

8. Machine selon la revendication 6, dans laquelle le système comprend un capteur optique placé sur un rail (12) de guidage des godets pour détecter le passage des ondulations du brin mou de la chaîne.

9. Machine selon l'une des revendications 6 à 8, dans laquelle le système comprend une unité de traitement (24) de données qui compare à une valeur de consigne le nombre d'ondulations comptabilisées dans une période de temps donnée pour fournir un signal de commande d'alarme ou de réglage.

10. Machine selon la revendication 9, dans laquelle la dite unité de traitement de données est programmée pour répéter de façon cyclique l'opération de comparaison.

## Claims

1. A method of monitoring the tension of a continuous endless drive elongate member (13) mounted to be moved over a closed-loop path (T) and having a slack run (22) along which it forms undulations (O), said method being **characterized in that** it consists in placing a sensor (23) on said closed-loop path for detecting undulations going past in the slack run, and in counting (24) the number of undulations detected by the sensor, said number of counted undulations serving as a magnitude for measuring the tension of the drive member.

2. A method according to claim 1, in which a contactless sensor is used to detect undulations going past in the slack run.

3. A method according to claim 2, in which an inductive sensor is used for detecting undulations going past in the slack run.

4. A method according to claim 2, in which an optical sensor is used to detect undulations going past in the slack run.

5. A method according to any one of claims 1 to 4, in which the drive member is a bin drive chain for driving bins (11) in a mail handling machine.

6. A mail handling machine having a bin carrousel (1) whose bins (11) are driven to move around a closed-loop path (T) via an endless roller drive chain (13) having a slack run (22) along which the chain forms undulations (O), said machine being **characterized in that** it includes a system (23) suitable for detecting undulations going past in the slack run of the chain, and in counting the number of detected undulations for the purpose of monitoring the tension of the chain.

7. A machine according to claim 6, in which the system comprises an inductive sensor placed on a guide rail (12) for guiding the bins for the purpose of detecting undulations going past in the slack run of the chain.

8. A machine according to claim 6, in which the system comprises an optical sensor placed on a guide rail (12) for guiding the bins for the purpose of detecting undulations going past in the slack run of the chain.

9. A machine according to any one of claims 6 to 8, in which the system further comprises a data-processing unit (24) that compares the number of undulations counted over a given period of time with a reference value so as to deliver an alarm or adjustment control signal.

10. A machine according to claim 9, in which the data-processing unit is programmed to repeat the comparison operation cyclically.

## Patentansprüche

1. Verfahren zur Steuerung der Spannung eines liegenden kontinuierlichen endlosen Antriebsorgans (13), das über eine Strecke (T) in geschlossener Schleife verlagert wird und das einen schlaffen Trum (22) aufweist, entlang dem dieses Wellen (O) erzeugt,
**dadurch gekennzeichnet,**
**dass** es darin besteht, auf der in geschlossener Schleife verlaufenden Strecke einen Sensor (23) anzuordnen, um den Durchgang der Wellen des schlaffen Trums zu erfassen und die Anzahl von durch den Sensor erfassten Wellen zu zählen (24), wobei die gezählte Anzahl von Wellen als Messgröße für die Spannung des Antriebsorgans dient.

2. Verfahren nach Anspruch 1, bei dem ein kontaktloser Sensor für die Erfassung des Durchgangs von Wellen des schlaffen Trums eingesetzt wird.

3. Verfahren nach Anspruch 2, bei dem ein induktiver Sensor für die Erfassung des Durchgangs von Wellen des schlaffen Trums eingesetzt wird.

4. Verfahren nach Anspruch 2, bei dem ein optischer Sensor für die Erfassung des Durchgangs von Wellen des schlaffen Trums eingesetzt wird.

5. Verfahren nach einem der Ansprüche 1 bis 4, bei dem das Antriebsorgan eine Antriebskette von Näpfen (11) in einer Postverarbeitungsmaschine ist.

6. Postverarbeitungsmaschine, umfassend ein Karussel (1) mit Näpfen (11), dessen Näpfe gemäß einer Strecke (T) in geschlossener Schleife mittels einer endlosen Antriebskette mit Wälzkörpern zur Verlagerung angetrieben sind, mit einem schlaffen Trum (22), entlang dessen die Kette Wellen (O) bildet,
**dadurch gekennzeichnet,**
**dass** sie ein System (23) umfasst, das in der Lage ist, den Durchgang von Wellen des schlaffen Trums der Kette zu erfassen und die Anzahl von erfassten Wellen zur Regelung der Spannung der Kette zu zählen.

7. Maschine nach Anspruch 6, bei der das System einen induktiven Sensor umfasst, der auf einer Führungsschiene (12) der Näpfe angeordnet ist, um den Durchgang der Wellen des schlaffen Trums der Kette zu erfassen.

8. Maschine nach Anspruch 6, bei der das System einen optischen Sensor umfasst, der auf einer Führungsschiene (12) der Näpfe angeordnet ist, um den Durchgang der Wellen des schlaffen Trums der Kette zu erfassen.

9. Maschine nach einem der Ansprüche 6 bis 8, bei der das System eine Datenverarbeitungseinheit (24) umfasst, die die Anzahl gezählter Wellen in einer gegebenen Zeitperiode mit einem Vorgabewert vergleicht, um ein Steuersignal für Alarm oder für die Regelung abzugeben.

10. Maschine nach Anspruch 9, bei der die Datenverarbeitungseinheit programmiert ist, um in zyklischer Weise den Vergleichsvorgang zu wiederholen.
